Europäisches Patentamt

(19) **European Patent Office**

**Office européen des brevets**

(11) Numéro de publication: **0 006 388**
**B1**

(12) **FASCICULE DE BREVET EUROPEEN**

(45) Date de publication du fascicule du brevet: **19.01.83**

(51) Int. Cl.³: **F 16 D 66/02**

(21) Numéro de dépôt: **79400395.4**

(22) Date de dépôt: **15.06.79**

(54) Indicateur d'usure pour frein à tambour.

(30) Priorité: **15.06.78 FR 7817938**

(43) Date de publication de la demande:
**09.01.80 Bulletin 80/1**

(45) Mention de la délivrance du brevet:
**19.01.83 Bulletin 83/3**

(84) Etats contractants désignés:
**BE DE GB IT NL SE**

(56) Documents cités:
**DE - A - 2 012 830**
**US - A - 3 297 985**

(73) Titulaire: **SOCIETE ANONYME D.B.A.**
**Centre Paris Pleyel**
**F-93521 St Denis Cédex 01 (FR)**

(72) Inventeur: **Carré, Jean-Jacques**
**100 Avenue du Président Wilson**
**F-93110 Montreuil (FR)**
Inventeur: **Volan, Gérard**
**1 rue de Bretagne**
**F-78140 Velizy (FR)**

(74) Mandataire: **Brullé, Jean et al,**
**Service Brevets Bendix 44, rue François 1er**
**F-75008 Paris (FR)**

Courier Press, Leamington Spa, England.

Indicateur d'usure pour frein à tambour

L'invention concerne un indicateur d'usure de garniture de friction pour frein à tambour du type comportant un plongeur monté coulissant dans un fourreau conducteur inséré dans la jante du segment et comportant une tête évasée susceptible d'être usée par contact avec la surface du tambour après une certaine usure de la garniture du segment. Un ressort sollicite le plongeur vers des moyens formant contact électrique contre lesquels l'extrémité libre du plongeur vient s'appliquer lorsque la tête du plongeur étant usée, le ressort est libéré faisant coulisser le plongeur dans le fourreau.

Il existe de très nombreux indicateurs d'usure montés sur segments de frein à tambour associés à un circuit électrique d'alarme dont il provoque la fermeture pour commander un dispositif avertisseur généralement l'allumage d'une lampe témoin placée sur le tableau de bord du véhicule.

Un indicateur qui montre les caractéristiques mentionnées ci-dessus a été décrit dans le fascicule de brevet US—A 3 297 985 au nom de Trebonsky et al. Ce dispositif comporte un petit plongeur qui est sollicité par le ressort vers un contact électrique placé à l'une des extrémités du fourreau, contact contre lequel le plongeur vient s'appliquer lorsque sa tête est usée par frottement au contact du tambour pour une usure donnée de la garniture.

Cet indicateur présente l'avantage de fermer le circuit d'alarme d'une façon positive. Il nécessite toutefois un raccordement par fils électriques effectué directement sur le segment.

Un indicateur d'usure dans lequel le raccordement par fils électriques à l'intérieur du frein est supprimé a été décrit dans la demande de brevet DE—A 2 012 830 au nom de Guthmann. Ce dispositif enseigne de placer sur la plaque support de frein des moyens formant contact électrique susceptibles d'être sollicités par une languette formée sur le segment après une certaine course de celui-ci représentative d'une limite d'usure prédéterminée.

Ce dispositif présente l'avantage de supprimer tout fil électrique à l'intérieur du frein et en particulier de supprimer les liaisons électriques avec le segment. Mais, dans cet indicateur d'une part la fermeture du circuit n'est pas positive à l'approche de la limite prédéterminée; en effet l'allumage du signal d'alarme sera effectué lors de l'application du freinage et l'extinction se produire au relâchement de celui-ci, et d'autre part ce dispositif ne donne pas une information de la limite effectivement atteinte sur la garniture mais une valeur approchée représentative d'un état moyen d'usure de la garniture le long de son arc.

L'invention se propose de créer un indicateur d'usure tel que décrit ci-dessus qui évite tout raccordement électrique effectué sur le segment lui-même. La solution de ce problème est caractérisée en ce que lesdits moyens formant contact électrique sont portés par la plaque support de frein à tambour sensiblement en alignement avec ledit fourreau, en ce que lesdits moyens formant contact électrique sont placés à une distance de l'extrémité du fourreau inférieure à la longueur de ce dernier, et en ce que ledit ressort est placé autour dudit fourreau et sollicite ledit plongeur au moyen d'un plateau d'un diamètre supérieure au diamètre du fourreau.

On conçoit que, grâce à une telle disposition, le segment ne comporte qu'un ensemble mécanique formant percuteur qui vient agir lors de son déplacement sur les moyens formant contact électrique portés par le plateau du frein, le diamètre du plateau et l'effort du ressort étant tels que le plongeur est guidé lors de sa course pour venir effectivement en contact avec les moyens formant contact électrique portés par le plateau du frein.

Il en résulte de très nombreux avantages:

— le montage et le démontage du frein sont facilités et il n'est plus nécessaire d'utiliser des fils de raccordement dont l'isolant résiste aux hautes températures;

le diamètre du plateau peut être adapté de manière à pouvoir disposer d'un ressort ayant une course et un effort importants,

— les moyens formant contact électrique peuvent être disposés dans une zone facile d'accès, leur position n'étant pas imposée par rapport à la jante.

L'invention sera maintenant décrite plus en détail en se référant aux dessins annexés dans lesquels:

— la figure 1 montre en coupe prise suivant un plan radial du frein, un indicateur d'usure selon un mode de réalisation préféré de l'invention;

— la figure 2 est une vue de dessus de l'indicateur de la figure 1 avec coupe partielle;

— la figure 3 montre le bloc de contact électrique de l'indicateur vu selon la flèche 3 de la figure 2;

— la figure 4 montre en coupe suivant un plan radial du frein un indicateur suivant un autre mode de réalisation;

— la figure 5 est une coupe selon la ligne 5—5 de la figure 4; et

— la figure 6 est une vue en coupe selon la ligne 6—6 du bloc de contact de la figure 5.

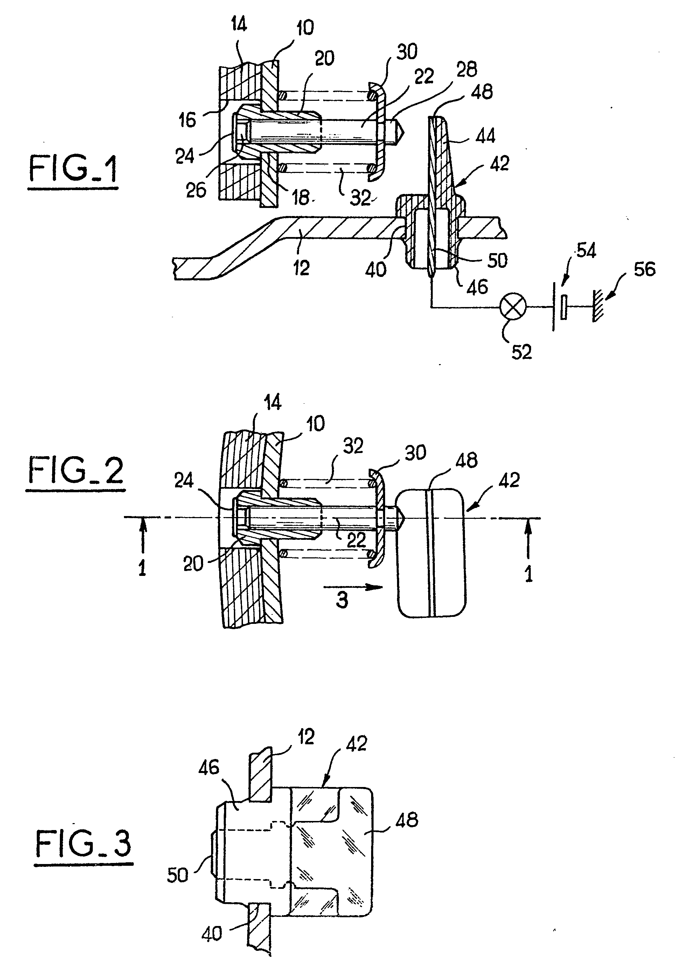

On a montré à la figure 1, un ensemble formant indicateur d'usure selon l'invention associé d'une part à la jante 10 du segment d'un frein à tambour et d'autre part à la plaque-support ou plateau 12 dudit frein.

La jante 10 porte une garniture de friction 14. Dans la garniture de friction 14 est ménagé un orifice 16 qui est prolongé par un perçage de plus petit diamètre 18 traversant la jante 10. Dans le perçage 18 est enfilé un fourreau 20 en laiton présentant une partie de plus grand diamètre, en appui sur la jante 10, qui fait saillie dans l'orifice 16 et une partie de plus petit diamètre qui se prolonge du côté de la jante dépourvue de garniture. Dans le fourreau 20 coulisse un plongeur 22 également en laiton. Le plongeur 22 comporte une tête 24 dont le diamètre est supérieur au diamètre intérieur du fourreau 20, la tête étant reliée au corps du plongeur 22 par une portion cylindrique 26 de plus petit diamètre que ledit corps. A son extrémité libre 28, le plongeur porte un plateau 30 qui reçoit la dernière spire d'un ressort de compression 32 qui prend appui sur la jante 10 et sollicite la plongeur vers la droite de la figure 1. L'extrémité 28 se termine par une partie conique.

Le plateau de frein 12 comporte un perçage 40 dans lequel est monté, par encliquetage, un bloc isolant 42 qui fait saillie en 44 à l'intérieur du frein (partie supérieure de la figure 1) d'une part et se prolonge par une jupe cylindrique souple 46 vers l'extérieur du frein (en dessous du plateau 12, si l'on considère la figure 1) d'autre part.

Contre la partie supérieure 44 du bloc isolant 42 est appliquée une plaquette métallique 48 qui se prolonge à l'intérieur de la jupe 46 sous la forme d'un cosse 50 destinée au raccordement du circuit électrique d'alarme.

Le circuit électrique associé à l'ensemble d'indicateur qui vient d'être décrit a été représenté schématiquement. Il comporte une lampe 52 reliée à la cosse 50 et à la borne + d'une batterie 54 dont la borne — est reliée à la masse du véhicule.

Le dispositif qui vient d'être décrit fonctionne de la façon suivante:

Lorsque la garniture 14 du segment atteint une certaine usure, le tambour (non représenté) vient user la tête 24 du plongeur et, après disparition de cette dernière, le ressort 32 repousse brutalement le plongeur 22 (vers la droite si l'on considère le dessin) qui vient buter contre la plaquette 48 par son extrémité conique 28.

Grâce à la présence de cette extrémité conique, on réalise un bon contact électrique permanent entre le plongeur 22 et la plaquette 48. Toutes les pièces du dispositif associé à la jante étant conductrices de l'électricité et le segment de frein étant à la masse, le circuit électrique comportant la lampe 52 se trouve fermé et la lampe s'allume indiquant l'état d'usure de la garniture.

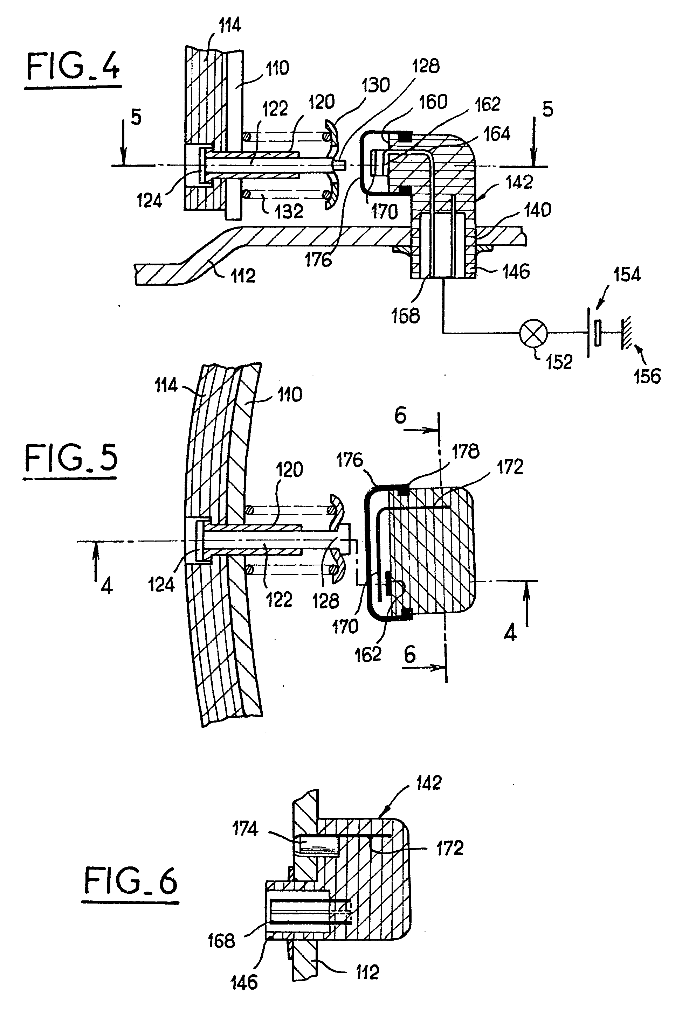

Dans le mode de réalisation des figures 4 à 6, on a désigné par les mêmes chiffres de référence augmentés d'une centaine les éléments identiques ou similaires à ceux des figures 1 à 3.

On retrouve, enfilé dans la jante 110 et la garniture 114 un fourreau 120, dans lequel peut coulisser un plongeur 122 dont la tête 124 est maintenue appliquée contre l'extrémité du fourreau par l'action d'un ressort de compression 132 prenant appui sur un plateau 130.

Le plongeur 122 se distingue du plongeur 22 du mode de réalisation des figures 1 à 3 en ce que son extrémité libre 128 est plate.

Le bloc porte-contacts 142 se distingue sensiblement du bloc 42 des figures 1 à 3 comme indiqué ci-après.

Le bloc 142, réalisé en matière synthétique isolante, comporte une partie supérieure (si l'on considère la figure 4) qui s'étend à l'intérieur du frein. Il présente une face 160 placée en vis-à-vis de l'extrémité libre 128 du plongeur. Contre la face 160, se trouve un contact plat 162 relié par un conducteur 164, noyé dans le bloc 142, à une douille 168, elle-même connectée (grâce à une prise non représentée engagée dans la jupe 146) au circuit comportant la lampe 152, la batterie 154 et la masse 156. Un contact 170, réalisé sous la forme d'une lame souple, est disposé à une certaine distance du contact 162. Ce contact 170 est relié par un conducteur 172, noyé dans le bloc 142, à une broche de masse 174 insérée dans un perçage correspondant effectué dans le plateau de frein 112.

Un capuchon de protection 176, réalisé en matériau élastomère souple, est enfilé sur la face 160 du bloc 142, ses bords comportent un bourrelet 178 engagé dans une gorge périphérique ménagée sur le bloc 142.

Le fonctionnement du dispositif représenté aux figures 4 à 6 est le suivant:

Lorsque le tambour (non représenté) a usé la tête 124 du plongeur 122, ce dernier est sollicité vers la droite (si l'on considère le dessin) et, après avoir déformé le capuchon souple 176, applique la lame de contact souple 170 sur le contact 162. L'application des contacts l'un sur l'autre reste maintenue grâce au ressort 132. Le circuit électrique d'alarme est fermé par les éléments suivants : masse 156, batterie 154, lampe 152, douille 168, conducteur 164, contact 162, contact 170, conducteur 172, broche de masse 174 du plateau 112 lui-même à la masse.

On constate que, dans ce deuxième mode de réalisation également, on a pu éviter l'introduction de tout fil électrique associé au segment à l'intérieur du frein et que la liaison électrique peut être effectuée à l'extérieur de ce dernier par insertion d'une prise dans la jupe 146.

On notera que les dimensions des divers éléments des ensembles formant indicateurs qui viennent d'être décrits doivent être choisies de façon à en permettre le fonctionnement parfait. C'est ainsi que le bloc de contact doit être suffisamment distant du bord externe du plateau pour permettre le montage du segment muni du plongeur lorsque la garniture est neuve et que la longueur du fourreau doit être suffisante pour que le plongeur ne s'en échappe pas lors de son déplacement vers le bloc de contact après usure de la garniture.

## Revendication

Indicateur d'usure de garniture de friction (14, 114) pour frein à tambour du type comportant un plongeur (22, 122) monté coulissant dans un fourreau conducteur (20, 120) inséré dans la jante (10, 110) du segment et comportant une tête (24, 124) évasée susceptible d'être usée par contact avec la surface du tambour après une certaine usure de la garniture (14, 114) du segment, un ressort (32, 132) sollicitant ledit plongeur vers des moyens formant contact électrique (42, 48; 142, 162, 170) contre lesquels l'extrémité libre (28, 128) du plongeur vient s'appliquer lorsque, la tête du plongeur étant usée, le ressort est libéré, faisant coulisser le plongeur dans le fourreau, caractérisé en ce que lesdits moyens formant contact électrique (42, 48; 142, 162, 170) sont portés par la plaque support (12, 112) de frein à tambour sensiblement en alignement avec ledit fourreau (20, 120), en ce que lesdits moyens formant contact électrique sont placés à une distance de l'extrémité du fourreau inférieure à la longueur de ce dernier, et en ce que ledit ressort (32, 132) est placé autour dudit fourreau et sollicite ledit plongeur (22, 122) au moyen d'un plateau (30, 130) d'un diamètre supérieur au diamètre du fourreau (20, 120).

## Patentanspruch

Abnutzungsanzeiger für den Reibbelag (14, 114) einer Trommelbremse, mit einem Plunger (22, 122), der gleitend in einer leitenden Hülse (20, 120) gelagert ist, die in den Bremsbelagträger (10, 110) eingesetzt ist und einen erweiterten Kopf (24, 124) trägt, der durch Berührung mit der Oberfläche der Trommel nach einer bestimmten Abnutzung des Reibbelages (14, 114) abgenutzt wird, einer Feder (32, 132), die den Plunger in Richtung auf einen elektrischen Kontakt herstellende Mittel (42, 48; 142, 162, 170) vorspannt, an die sich das freie Ende (28, 128) des Plungers anlegt, wenn die Feder nach Abnutzung des Kopfes des Plungers freigesetzt wird, wodurch der Plunger zu einer Gleitbewegung in der Hülse veranlaßt wird, dadurch gekennzeichnet, daß die einen elektrischen Kontakt herstellenden Mittel (42, 48; 142, 162, 170) von der Halteplatte (12, 120) der Trommelbremse im wesentlichen ausgerichtet zur Hülse (20, 120) getragen werden, daß die einen elektrischen Kontakt herstellenden Mittel vom Ende der Hülse einen Abstand haben, der kleiner als die Länge der letzteren ist, und daß die Feder (32, 132) um die Hülse herum angeordnet ist und den Plunger (22, 122) mittels einer Scheibe (30, 130) vorspannt, deren Durchmesser größer als der Durchmesser der Hülse (20, 120) ist.

## Claim

An indicator of wear of a friction lining (14, 114) for a drum brake, comprising a plunger (22, 120) slidably mounted in a conductor sleeve (20, 120) inserted in the brake lining support (10, 110) and comprising an enlarged head (24, 124) adapted to be worn by engagement of the surface of the drum upon a predetermined wear of the brake lining (14, 114), a spring (32, 132) biasing said plunger towards means for making an electrical contact (42, 48; 142, 162, 170), against which means the free end (28, 128) of the plunger will abut when, the head of the plunger having been worn down, the spring has been released, causing the plunger to slide in the sleeve, characterized in that said means for making an electrical contact (42, 48; 142, 162, 170) are carried by the support plate (12, 112) of the drum brake substantially in alignment with said sleeve (20, 120), in that said means for making an electrical contact are spaced a distance from the end of the sleeve which is smaller than the length of the latter, and in that said spring (32, 132) is placed around said sleeve and biases said plunger (22, 122) by means of a plate (30, 130) of a diameter smaller than the diameter of the sleeve (20, 120).

**0 006 388**

FIG_1

FIG_2

FIG_3

1

FIG. 4

FIG. 5

FIG. 6